# EUROPEAN PATENT APPLICATION

(11) **EP 4 811 016 A1**
(43) Date of publication of application: **23.09.2026**
(21) Application number: 23961803.6
(22) Date of filing: 19.12.2023
(51) Int. Cl.: G02B 27/00, G01S 7/484

(54) **OPTICAL ASSEMBLY, OPTICAL SYSTEM, AND LIDAR**

(71) Applicant: Yinwang Intelligent Technologies Co., Ltd., Shenzhen, Guangdong 518110 (CN)
(72) Inventor: XIAO, Xisheng, Shenzhen, Guangdong 518110 (CN); LONG, Yaxue, Shenzhen, Guangdong 518110 (CN); LIU, Jun, Shenzhen, Guangdong 518110 (CN)
(74) Representative: Pfenning, Meinig & Partner mbB
(86) International application number: PCT/CN2023/139942
(87) International publication number: WO 2025/129458

(57) **Abstract**

An optical component (200), an optical system (2300), and a lidar (100) are provided, and may be applied to the lidar field. The optical component (200) includes at least one rotationally symmetric aspherical lens (201, 203, 207, 208, 210), and at least one rotationally symmetric spherical lens (202, 204, 209) or a non-rotationally symmetric cylindrical lens (205, 206, 211). The optical component (200) is configured to shape a laser beam emitted by a laser (2310). A quantity of lenses in the optical component (200) is less than or equal to 3. Reducing the quantity of lenses in the optical component (200) not only helps reduce structural complexity of the optical component (200), but also facilitates modularization of the optical component (200), and reduces processing and manufacturing costs and mounting costs of the optical component (200).

## Description

### TECHNICAL FIELD

This application relates to the optical field of a lidar, and more specifically, to an optical component, an optical system, and a lidar.

### BACKGROUND

An emitting optical system of a lidar is one of core components of the lidar, and is configured to emit laser light to to-be-detected object space, so that a target can be illuminated by laser light of a specific wavelength. A receiving system of the lidar converges light reflected by an object to a detector, to form target detection. Currently, a mainstream semi-solid lidar has high costs due to a complex structure of an emitting optical system.

### SUMMARY

This application provides an optical component, an optical system, and a lidar, to help reduce structural complexity of an optical component in an emitting optical system, thereby helping reduce costs of the lidar.

According to a first aspect, an optical component is provided. The optical component includes at least one rotationally symmetric aspherical lens, and at least one rotationally symmetric spherical lens or at least one non-rotationally symmetric cylindrical lens. The optical component is configured to shape a laser beam emitted by a laser. A quantity of lenses in the optical component is less than or equal to 3.

Based on the foregoing technical solution, reducing the quantity of lenses in the optical component not only helps reduce structural complexity of the optical component, but also facilitates modularization of the optical component, and reduces processing and manufacturing costs and mounting costs of the optical component, thereby helping reduce costs of a lidar.

In addition, when the optical component includes the at least one non-rotationally symmetric cylindrical lens, the cylindrical lens may homogenize a beam. This helps resolve a problem of insufficient light spot coverage or uneven light spot coverage.

The rotationally symmetric spherical lens and the rotationally symmetric aspherical lens may be circular lenses. The circular lens may be a lens whose outer contour is a circle, or outer contours of the spherical lens and the aspherical lens may be a circle. The spherical lens may be a lens whose surface geometry is a spherical shape, and the aspherical lens may be a lens whose surface geometry is an aspherical shape (for example, a parabolic shape or an oval shape).

In some possible implementations, the optical component includes at most one non-rotationally symmetric cylindrical lens.

In some possible implementations, the optical component may be located in an emitting optical system of the lidar.

With reference to the first aspect, in some implementations of the first aspect, the optical component includes one rotationally symmetric aspherical lens and one rotationally symmetric spherical lens, the aspherical lens is configured to perform primary collimation on the laser beam emitted by the laser, to obtain a first beam, and the spherical lens is configured to perform secondary collimation on the first beam, to obtain a second beam.

Based on the foregoing technical solution, because the optical component does not include a non-rotationally symmetric cylindrical lens, a dimension of matching or coupling between an emitting module and a receiving module in the lidar can be reduced, thereby reducing difficulty of matching or coupling between the emitting module and the receiving module. In addition, because the optical component includes only two rotationally symmetric circular lenses, structural complexity of the optical component can be further reduced, and processing and manufacturing costs and mounting costs of the optical component can be further reduced.

With reference to the first aspect, in some implementations of the first aspect, a front surface of the aspherical lens is a concave surface, a rear surface of the aspherical lens is a convex surface, a refractive index of the aspherical lens ranges between 1.49 to 1.55, and an Abbe number of the aspherical lens ranges between 61 to 67.

The front surface of the aspherical lens may be understood as a surface that is of the aspherical lens and that is close to the laser, and the rear surface of the aspherical lens may be understood as a surface that is of the aspherical lens and that is away from the laser.

The Abbe number is used to evaluate dispersion performance of a lens material in the optical field, and may also be referred to as a dispersion coefficient.

With reference to the first aspect, in some implementations of the first aspect, a front surface of the spherical lens is a concave surface, a rear surface of the spherical lens is a convex surface, a refractive index of the spherical lens ranges between 1.75 to 1.85, and an Abbe number of the spherical lens ranges between 43 to 49.

The front surface of the spherical lens may be understood as a surface that is of the spherical lens and that is close to the laser, and the rear surface of the spherical lens may be understood as a surface that is of the spherical lens and that is away from the laser.

With reference to the first aspect, in some implementations of the first aspect, surface shape parameters of the aspherical lens are:

| | S1 | S2 |
|---|---|---|
| Radius | (-31.188, -23.391) | (-15.576, -11.682) |
| Conic | (5.373, 7.164) | (-0.744, -0.558) |
| A4 | (-3.6226E-3, -8.0500E-5) | (-7.2708E-4, -1.6157E-5) |
| A6 | (1.6175E-6, 7.2789E-5) | (1.747E-7, 7.9052E-6) |
| A8 | (-4.7171E-7, -1.0482E-8) | (2.4600E-9, 1.1071E-7) |
| A10 | (-1.1634E-9, -2.5850E-11) | (-2.1773E-9, -4.8380E-11) |
| A12 | (1.1717E-12, 5.2725E-11) | (-2.7319E-12, -6.0710E-14) |

S1 is the front surface of the aspherical lens, and S2 is the rear surface of the aspherical lens. Radius is a curvature radius, and Conic is a conic coefficient. A4, A6, A8, A10, and A12 are aspherical coefficients.

With reference to the first aspect, in some implementations of the first aspect, a thickness of the aspherical lens ranges between (5.67 mm, 9.32 mm).

With reference to the first aspect, in some implementations of the first aspect, surface shape parameters of the spherical lens are:

| | S3 | S4 |
|---|---|---|
| Radius | (-68.88, -51.66) | (-25.92, -19.44) |

With reference to the first aspect, in some implementations of the first aspect, a thickness of the spherical lens ranges between (3.62 mm, 5.95 mm).

S3 is the front surface of the spherical lens, and S4 is the rear surface of the spherical lens.

With reference to the first aspect, in some implementations of the first aspect, an air gap between the aspherical lens and a center of the laser ranges between (5.6 mm, 9.2 mm), and an air gap between the aspherical lens and a center of the spherical lens ranges between (9.13 mm, 15 mm).

Based on the foregoing technical solution, material parameters and the surface shape parameters of the aspherical lens and the spherical lens are configured, so that the laser beam can be shaped (for example, collimated) by using as few rotationally symmetric lenses as possible. In addition, a position of a beam waist may be away from a surface of the spherical lens. This helps reduce a required aperture for a rotating mirror or a window, and helps avoid an increase in costs caused by an excessively large size of the rotating mirror or the window.

With reference to the first aspect, in some implementations of the first aspect, the method further includes: A distance between a beam waist of the laser beam emitted by the laser after being shaped by the optical component and the rear surface of the spherical lens in the optical component is greater than or equal to 17 mm and less than or equal to 23 mm.

In some possible implementations, the rotating mirror or the window may be disposed near the beam waist. In this way, a light cutting problem caused by an insufficient size of the rotating mirror or the window can be avoided.

With reference to the first aspect, in some implementations of the first aspect, a length of a light emitting region in the laser ranges between (8.49 mm, 9.83 mm), and a divergence angle of the laser beam emitted by the laser after being shaped by the optical component in a long-edge direction of the light emitting region ranges between 20° to 25°.

Based on the foregoing technical solution, good collimation effect can be implemented by using as few lenses as possible, to help improve collimation efficiency of the optical component.

With reference to the first aspect, in some implementations of the first aspect, the optical component includes one rotationally symmetric aspherical lens, one rotationally symmetric spherical lens, and one non-rotationally symmetric cylindrical lens. The aspherical lens is configured to perform primary collimation on the laser beam emitted by the laser, to obtain a third beam; the spherical lens is configured to perform secondary collimation on the third beam, to obtain a fourth beam; and the cylindrical lens is configured to homogenize the fourth beam, to obtain a fifth beam.

Based on the foregoing technical solution, the beam can be collimated by using the aspherical lens and the spherical lens, and the beam can be homogenized by using the cylindrical lens. This helps resolve a problem of insufficient light spot coverage. Because the optical component includes only one non-rotationally symmetric cylindrical lens, structural complexity of the optical component is reduced. In addition, modularization of the optical component can be facilitated, and processing and manufacturing costs and mounting costs of the optical component can be reduced.

With reference to the first aspect, in some implementations of the first aspect, after being homogenized by the cylindrical lens, two segments of discrete light spots overlap in a vertical direction.

In some possible implementations, the laser includes two adjacent light emitting regions, and there is a gap between the two adjacent light emitting regions. Laser beams emitted by the two adjacent light emitting regions at the same time are collimated after passing through the aspherical lens and the spherical lens, and light spots formed after the collimated beams pass through the cylindrical lens overlap.

Based on the foregoing technical solution, in the light spots formed after the beams are homogenized by the cylindrical lens, the two segments of discrete light spots overlap in the vertical direction. In this way, a problem of insufficient light spot coverage caused by the gap between the two adjacent light emitting regions in the laser can be resolved.

With reference to the first aspect, in some implementations of the first aspect, a front surface of the aspherical lens is a concave surface, a rear surface of the aspherical lens is a convex surface, a refractive index of the aspherical lens ranges between 1.45 to 1.6, and an Abbe number of the aspherical lens ranges between 61 to 67.

With reference to the first aspect, in some implementations of the first aspect, a front surface of the spherical lens is a concave surface, a rear surface of the spherical lens is a convex surface, a refractive index of the spherical lens ranges between 1.7 to 1.9, and an Abbe number of the spherical lens ranges between 36 to 45.

With reference to the first aspect, in some implementations of the first aspect, a front surface of the cylindrical lens is a plane, a rear surface of the cylindrical lens is a concave surface, a refractive index of the cylindrical lens ranges between 1.45 to 1.6, and an Abbe number of the cylindrical lens ranges between 61 to 67.

The front surface may be understood as a surface close to the laser, and the rear surface may be understood as a surface away from the laser.

With reference to the first aspect, in some implementations of the first aspect, surface shape parameters of the aspherical lens are:

| | S5 | S6 |
|---|---|---|
| Radius | (-31.19, -23.39) | (-15.58, -11.68) |
| Conic | (5.37, 7.16) | (-0.74, -0.56) |
| A4 | (-3.6226E-3, -8.0500E-5) | (-7.2708E-4, -1.6157E-5) |
| A6 | (1.6175E-6, 7.2789E-5) | (1.747E-7, 7.9052E-6) |
| A8 | (-4.7171E-7, -1.0482E-8) | (2.4600E-9, 1.1071E-7) |
| A10 | (-1.1634E-9, -2.5850E-11) | (-2.1773E-9, -4.8380E-11) |
| A12 | (1.1717E-12, 5.2725E-11) | (-2.7319E-12, -6.0710E-14) |

S5 is the front surface of the aspherical lens, and S6 is the rear surface of the aspherical lens.

With reference to the first aspect, in some implementations of the first aspect, a thickness of the aspherical lens ranges between (5.67 mm, 9.32 mm).

With reference to the first aspect, in some implementations of the first aspect, surface shape parameters of the spherical lens are:

| | S7 | S8 |
|---|---|---|
| Radius | (-68.88, -51.66) | (-25.92, -19.44) |

S7 is the front surface of the spherical lens, and S8 is the rear surface of the spherical lens.

With reference to the first aspect, in some implementations of the first aspect, a thickness of the spherical lens ranges between (3.62 mm, 6 mm).

With reference to the first aspect, in some implementations of the first aspect, surface shape parameters of the cylindrical lens are:

| | S9 | S10 |
|---|---|---|
| Radius Y | inf | (180.00, 240.00) |

S9 is the front surface of the cylindrical lens, and S10 is the rear surface of the cylindrical lens. Radius Y may be understood as a curvature radius of the cylindrical lens in a Y-axis direction. That the curvature radius in the Y-axis direction is inf indicates that a surface is a plane. The laser includes a rectangular light emitting region, and a long-edge direction of the rectangular light emitting region is the Y-axis direction.

With reference to the first aspect, in some implementations of the first aspect, a thickness of the cylindrical lens ranges between (1.4 mm, 2.3 mm).

With reference to the first aspect, in some implementations of the first aspect, an air gap between the aspherical lens and a center of the laser ranges between (5.6 mm, 9.2 mm), an air gap between the aspherical lens and a center of the spherical lens ranges between (9.13 mm, 15 mm), and an air gap between the cylindrical lens and the center of the spherical lens ranges between (1.4 mm, 2.3 mm).

Based on the foregoing technical solution, material parameters and the surface shape parameters of the aspherical lens, the spherical lens, and the cylindrical lens are configured, so that, the laser beam can be shaped (for example, collimated and homogenized) by using as few lenses as possible. In addition, a position of a beam waist may be away from a surface of the cylindrical lens. This helps reduce a required aperture for a rotating mirror or a window, and helps avoid an increase in costs caused by an excessively large size of the rotating mirror or the window.

With reference to the first aspect, in some implementations of the first aspect, the method further includes: A distance between a beam waist of the laser beam emitted by the laser after being shaped by the optical component and the rear surface of the cylindrical lens in the optical component is greater than or equal to 15 mm and less than or equal to 25 mm.

With reference to the first aspect, in some implementations of the first aspect, a length of a light emitting region in the laser ranges between (11.4 mm, 13.8 mm), and a divergence angle of the laser beam emitted by the laser after being shaped by the optical component in a long-edge direction of the light emitting region ranges between 21° to 27°.

Based on the foregoing technical solution, good collimation effect can be implemented by using as few lenses as possible, to help improve collimation efficiency of the optical component.

With reference to the first aspect, in some implementations of the first aspect, the optical component includes one non-rotationally symmetric cylindrical lens and one rotationally symmetric aspherical lens. The cylindrical lens is configured to perform primary collimation on the laser beam emitted by the laser, to obtain a sixth beam; and the aspherical lens is configured to perform secondary collimation on the sixth beam, to obtain a seventh beam.

Based on the foregoing technical solution, the beam can be collimated by using the cylindrical lens and the aspherical lens. Because the optical component includes only one non-rotationally symmetric cylindrical lens, structural complexity of the optical component is reduced. In addition, modularization of the optical component can be facilitated, and processing and manufacturing costs and mounting costs of the optical component can be reduced.

With reference to the first aspect, in some implementations of the first aspect, a front surface of the cylindrical lens is a concave surface, a rear surface of the cylindrical lens is a convex surface, a refractive index of the cylindrical lens ranges between 1.45 to 1.51, and an Abbe number of the cylindrical lens ranges between 67 to 73.

With reference to the first aspect, in some implementations of the first aspect, a front surface and a rear surface of the aspherical lens are convex surfaces, a refractive index of the aspherical lens ranges between 1.76 to 1.86, and an Abbe number ranges between 38 to 44.

With reference to the first aspect, in some implementations of the first aspect, surface shape parameters of the cylindrical lens are:

| | S11 | S12 |
|---|---|---|
| Radius X | (-4.87, -3.65) | (-7.2, -5.4) |

S11 is the front surface of the cylindrical lens, and S12 is the rear surface of the cylindrical lens. Radius X may be understood as a curvature radius of the cylindrical lens in an X-axis direction. The laser includes a rectangular light emitting region, and a short-edge direction of the rectangular light emitting region is the X-axis direction.

With reference to the first aspect, in some implementations of the first aspect, a thickness of the cylindrical lens ranges between (1.87 mm, 3.07 mm).

With reference to the first aspect, in some implementations of the first aspect, surface shape parameters of the aspherical lens are:

| | S13 | S14 |
|---|---|---|
| Radius | (31.54, 42.05) | (-35.09, -26.32) |
| Conic | (2.65, 3.53) | (2.95, 3.94) |
| A4 | (-5.9193E-4, -1.3154E-5) | (-1.1061E-4, -2.4580E-6) |
| A6 | (-6.8803E-7, -1.5290E-8) | (1.0544E-8, 4.7446E-7) |
| A8 | (-1.4664E-8, -3.2590E-10) | (-3.5501E-8, -7.8900E-10) |
| A10 | (1.4595E-11, 6.5679E-10) | (1.7320E-11, 7.7942E-10) |

S13 is the front surface of the aspherical lens, and S14 is the rear surface of the aspherical lens.

With reference to the first aspect, in some implementations of the first aspect, a thickness of the aspherical lens ranges between (2.92 mm, 4.79 mm).

With reference to the first aspect, in some implementations of the first aspect, an air gap between the cylindrical lens and a center of the laser ranges between (11.3 mm, 18.57 mm), and an air gap between the cylindrical lens and a center of the aspherical lens ranges between (1.06 mm, 1.74 mm).

Based on the foregoing technical solution, material parameters and the surface shape parameters of the cylindrical lens and the aspherical lens are configured, so that the laser beam can be shaped (for example, collimated) by using as few lenses as possible. In addition, a position of a beam waist may be away from a surface of the aspherical lens. This helps reduce a required aperture for a rotating mirror or a window, and helps avoid an increase in costs caused by an excessively large size of the rotating mirror or the window.

With reference to the first aspect, in some implementations of the first aspect, the method further includes: A distance between a beam waist of the laser beam emitted by the laser after being shaped by the optical component and the rear surface of the aspherical lens in the optical component is greater than or equal to 15 mm and less than or equal to 22 mm.

With reference to the first aspect, in some implementations of the first aspect, a length of a light emitting region in the laser ranges between (8.52 mm, 10.32 mm), and a divergence angle of the laser beam emitted by the laser after being shaped by the optical component in a long-edge direction of the light emitting region ranges between 22° to 28°.

Based on the foregoing technical solution, good collimation effect can be implemented by using as few lenses as possible, to help improve collimation efficiency of the optical component.

With reference to the first aspect, in some implementations of the first aspect, the optical component includes one rotationally symmetric aspherical lens and one rotationally symmetric spherical lens. The aspherical lens is configured to perform primary collimation on the laser beam emitted by the laser, to obtain an eighth beam; and the spherical lens is configured to perform secondary collimation on the eighth beam, to obtain a ninth beam.

Based on the foregoing technical solution, because the optical component does not include a non-rotationally symmetric cylindrical lens, a dimension of matching or coupling between an emitting module and a receiving module in a lidar can be reduced, thereby reducing difficulty of matching or coupling between the emitting module and the receiving module. In addition, because the optical component includes only two rotationally symmetric circular lenses, structural complexity of the optical component can be further reduced, and processing and manufacturing costs and mounting costs of the optical component can be further reduced.

With reference to the first aspect, in some implementations of the first aspect, a front surface of the aspherical lens is a concave surface, a rear surface of the aspherical lens is a convex surface, a refractive index of the aspherical lens ranges between 1.4 to 1.6, and an Abbe number of the aspherical lens ranges between 60 to 66.

With reference to the first aspect, in some implementations of the first aspect, a front surface and a rear surface of the spherical lens are convex surfaces, a refractive index of the spherical lens ranges between 1.8 to 2.0, and an Abbe number of the spherical lens ranges between 26 to 36.

With reference to the first aspect, in some implementations of the first aspect, surface shape parameters of the aspherical lens are:

| | S15 | S16 |
|---|---|---|
| Radius | (-6.320, -4.740) | (-10.049, -7.537) |
| Conic | (-1.2007E+1, -9.0050E0) | (-3.8915E0, -2.9186E0) |
| A4 | (-3.1081E-2, -6.9070E-4) | (4.2610E-5, 1.9176E-3) |
| A6 | (2.919E-5, 1.3138E-3) | (-3.8417E-4, -8.5370E-6) |
| A8 | (-1.0488E-5, -2.3310E-7) | (4.3030E-7, 1.9367E-5) |
| A10 | (-7.6122E-7, -1.6916E-8) | (-4.1409E-7, -9.2020E-9) |
| A12 | (3.7740E-10, 1.6981E-8) | (7.4590E-11, 3.3567E-9) |

S15 is the front surface of the aspherical lens, and S16 is the rear surface of the aspherical lens.

With reference to the first aspect, in some implementations of the first aspect, a thickness of the aspherical lens ranges between (3.25 mm, 5.34 mm).

With reference to the first aspect, in some implementations of the first aspect, surface shape parameters of the spherical lens are:

| | S17 | S18 |
|---|---|---|
| Radius | (67.607, 90.143) | (-33.652, -25.239) |

S17 is the front surface of the spherical lens, and S18 is the rear surface of the spherical lens.

With reference to the first aspect, in some implementations of the first aspect, a thickness of the spherical lens ranges between (4.9 mm, 8.1 mm).

With reference to the first aspect, in some implementations of the first aspect, an air gap between the aspherical lens and a center of the laser ranges between (4.892 mm, 8.036 mm), and an air gap between the spherical lens and a center of the aspherical lens ranges between (5.748 mm, 9.444 mm).

Based on the foregoing technical solution, material parameters and the surface shape parameters of the aspherical lens and the spherical lens are configured, so that the laser beam can be shaped (for example, collimated) by using as few rotationally symmetric lenses as possible. In addition, a position of a beam waist may be away from a surface of the spherical lens. This helps reduce a required aperture for a rotating mirror or a window, and helps avoid an increase in costs caused by an excessively large size of the rotating mirror or the window.

With reference to the first aspect, in some implementations of the first aspect, the method further includes: A distance between a beam waist of the laser beam emitted by the laser after being shaped by the optical component and the rear surface of the spherical lens in the optical component is greater than or equal to 25.5 mm and less than or equal to 31.5 mm.

In some possible implementations, the rotating mirror or the window may be disposed near the beam waist. In this way, a light cutting problem caused by an insufficient size of the rotating mirror or the window can be avoided.

With reference to the first aspect, in some implementations of the first aspect, a length of a light emitting region in the laser ranges between (8.83 mm, 10.22 mm), and a divergence angle of the laser beam emitted by the laser after being shaped by the optical component in a long-edge direction of the light emitting region ranges between 22° to 28°.

Based on the foregoing technical solution, good collimation effect can be implemented by using as few lenses as possible, to help improve collimation efficiency of the optical component.

With reference to the first aspect, in some implementations of the first aspect, the optical component includes one rotationally symmetric aspherical lens and one non-rotationally symmetric cylindrical lens. The aspherical lens is configured to perform primary collimation on the laser beam emitted by the laser, to obtain a tenth beam; and the cylindrical lens is configured to perform secondary collimation and homogenization on the tenth beam, to obtain an eleventh beam.

Based on the foregoing technical solution, material parameters and surface shape parameters of the aspherical lens and the cylindrical lens are configured, so that the laser beam can be shaped (for example, collimated and homogenized) by using as few lenses as possible. In addition, a position of a beam waist may be away from a surface of the cylindrical lens. This helps reduce a required aperture for a rotating mirror or a window, and helps avoid an increase in costs caused by an excessively large size of the rotating mirror or the window.

With reference to the first aspect, in some implementations of the first aspect, after a light spot is homogenized by the cylindrical lens, energy of the light spot is evenly distributed in a vertical direction.

Based on the foregoing technical solution, after the tenth beam is homogenized by the cylindrical lens, the energy in the light spot is evenly distributed. In this way, a beam quality problem (or a problem of uneven strength distribution of the light spot) can be avoided.

With reference to the first aspect, in some implementations of the first aspect, a front surface and a rear surface of the aspherical lens are convex surfaces, a refractive index of the aspherical lens ranges between 1.49 to 1.55, and an Abbe number of the aspherical lens ranges between 61 to 67.

With reference to the first aspect, in some implementations of the first aspect, a front surface of the cylindrical lens is a convex surface, a rear surface of the cylindrical lens is a concave surface, a refractive index of the cylindrical lens ranges between 1.49 to 1.55, and an Abbe number of the cylindrical lens ranges between 61 to 67.

With reference to the first aspect, in some implementations of the first aspect, surface shape parameters of the aspherical lens are:

| | S19 | S20 |
|---|---|---|
| Radius | (30.989, 41.318) | (-22.033, -16.525) |
| Conic | (-77.258, -57.944) | (0.265, 0.353) |
| A4 | (-1.0674E-3, -2.3720E-5) | (-2.2392E-3, -4.8580E-5) |
| A6 | (1.2471E-6, 5.6119E-5) | (2.0680E-6, 9.3060E-5) |
| A8 | (-1.4013E-6, -3.1140E-8) | (-2.1019E-6, -4.6710E-8) |
| A10 | (3.3250E-10, 1.49607E-8) | (4.4190E-10, 1.9886E-8) |

S19 is the front surface of the aspherical lens, and S20 is the rear surface of the aspherical lens.

With reference to the first aspect, in some implementations of the first aspect, a thickness of the aspherical lens ranges between (3.5 mm, 5.75 mm).

With reference to the first aspect, in some implementations of the first aspect, surface shape parameters of the cylindrical lens are:

| | S21 | S22 |
|---|---|---|
| Radius Y | (12.832, 17.110) | (11.339, 15.119) |

S21 is the front surface of the cylindrical lens, and S22 is the rear surface of the cylindrical lens.

According to a first aspect, in some implementations of the first aspect, a thickness of the cylindrical lens ranges between (3.42 mm, 5.61 mm).

With reference to the first aspect, in some implementations of the first aspect, an air gap between the aspherical lens and a center of the laser ranges between (15.279 mm, 25.098 mm), and an air gap between the cylindrical lens and a center of the aspherical lens ranges between (0.963 mm, 1.582 mm).

Based on the foregoing technical solution, material parameters and the surface shape parameters of the aspherical lens and the cylindrical lens are configured, so that the laser beam can be shaped (for example, collimated and homogenized) by using as few lenses as possible. In addition, a position of a beam waist may be away from a surface of the cylindrical lens. This helps reduce a required aperture for a rotating mirror or a window, and helps avoid an increase in costs caused by an excessively large size of the rotating mirror or the window.

With reference to the first aspect, in some implementations of the first aspect, the method further includes: A distance between a beam waist of the laser beam emitted by the laser after being shaped by the optical component and the rear surface of the cylindrical lens in the optical component is greater than or equal to 10 mm and less than or equal to 20 mm.

With reference to the first aspect, in some implementations of the first aspect, a length of a light emitting region in the laser ranges between (6.5 mm, 7.5 mm), and a divergence angle of the laser beam emitted by the laser after being shaped by the optical component in a long-edge direction of the light emitting region ranges between 15° to 21°.

Based on the foregoing technical solution, good collimation effect can be implemented by using as few lenses as possible, to help improve collimation efficiency of the optical component.

According to a second aspect, an optical system is provided. The optical system includes a laser and the optical component in any possible implementation of the first aspect.

With reference to the second aspect, in some implementations of the second aspect, the laser includes a plurality of rectangular light emitting regions, and a length-width ratio of each of the plurality of rectangular light emitting regions is greater than or equal to 5.

With reference to the second aspect, in some implementations of the second aspect, the plurality of rectangular light emitting regions emit light in a time-division manner.

Based on the foregoing technical solution, the plurality of rectangular light emitting regions emit light in the time-division manner, so that crosstalk between light rays of different fields of view on the receiving module can be avoided to some extent.

With reference to the second aspect, in some implementations of the second aspect, the plurality of rectangular light emitting regions include a first rectangular light emitting region and a second rectangular light emitting region, the first rectangular light emitting region and the second rectangular light emitting region are staggered in a long-edge direction, and a length of staggering is greater than or equal to 100 µm.

Based on the foregoing technical solution, staggering the two rectangular light emitting regions in the long-edge direction can avoid a gap caused by a mounting error.

With reference to the second aspect, in some implementations of the second aspect, the plurality of rectangular light emitting regions include a third rectangular light emitting region and a fourth rectangular light emitting region that are adjacent to each other, the third rectangular light emitting region and the fourth rectangular light emitting region are linearly arranged in the long-edge direction, and a gap between the third rectangular light emitting region and the fourth rectangular light emitting region is greater than or equal to 100 µm.

Based on the foregoing technical solution, the two adjacent rectangular light emitting regions are linearly arranged, and the gap between the two adjacent rectangular light emitting regions is greater than or equal to 100 µm, so that the two adjacent rectangular light emitting regions can be isolated from each other on an electrical device.

According to a third aspect, a lidar is provided. The lidar includes the optical component in any possible implementation of the first aspect, or includes the optical system in any possible implementation of the second aspect.

According to a fourth aspect, a terminal device is provided. The terminal device includes the lidar in any possible implementation of the third aspect.

With reference to the fourth aspect, in some implementations of the fourth aspect, the terminal device is a vehicle.

### BRIEF DESCRIPTION OF DRAWINGS

FIG. 1 is a diagram of a lidar according to an embodiment of this application;
FIG. 2 is a block diagram of an optical component according to an embodiment of this application;
FIG. 3 is a diagram of an optical component according to an embodiment of this application;
FIG. 4 is a diagram in which laser beams emitted by four light emitting regions are collimated after passing through an aspherical lens and a spherical lens according to an embodiment of this application;
FIG. 5 is a diagram in which light emitting regions emit light in a time-division manner according to an embodiment of this application;
FIG. 6 shows a correspondence between a light emitting region and an emitting light spot according to an embodiment of this application;
FIG. 7 is another diagram of an optical component according to an embodiment of this application;
FIG. 8 is a diagram in which laser beams emitted by a laser are collimated after passing through an aspherical lens, a spherical lens, and a cylindrical lens according to an embodiment of this application;
FIG. 9 is another diagram in which light emitting regions emit light in a time-division manner according to an embodiment of this application;
FIG. 10 shows another correspondence between a light emitting region and an emitting light spot according to an embodiment of this application;
FIG. 11 is another diagram of an optical component according to an embodiment of this application;
FIG. 12 is a diagram in which laser beams emitted by a laser are collimated after passing through a cylindrical lens and an aspherical lens according to an embodiment of this application;
FIG. 13 is still another diagram in which light emitting regions emit light in a time-division manner according to an embodiment of this application;
FIG. 14 shows still another correspondence between a light emitting region and an emitting light spot according to an embodiment of this application;
FIG. 15 is still another diagram of an optical component according to an embodiment of this application;
FIG. 16 is a diagram in which laser beams emitted by a laser are collimated after passing through an aspherical lens and a spherical lens according to an embodiment of this application;
FIG. 17 is yet another diagram in which light emitting regions emit light in a time-division manner according to an embodiment of this application;
FIG. 18 shows yet another correspondence between a light emitting region and an emitting light spot according to an embodiment of this application;
FIG. 19 is yet another diagram of an optical component according to an embodiment of this application;
FIG. 20 is a diagram in which laser beams emitted by a laser are collimated after passing through an aspherical lens and a cylindrical lens according to an embodiment of this application;
FIG. 21 is a diagram in which light emitting regions emit light in a time-division manner according to an embodiment of this application;
FIG. 22 shows a correspondence between a light emitting region and an emitting light spot according to an embodiment of this application; and
FIG. 23 is a block diagram of an optical system according to an embodiment of this application.

### DESCRIPTION OF EMBODIMENTS

The following describes technical solutions in embodiments of this application with reference to accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and represents that three relationships may exist. For example, at least one of A and B may represent the following three cases: Only A exists, both A and B exist, and only B exists.

In embodiments of this application, prefix words such as "first" and "second" are used only to distinguish between different described objects, and do not limit locations, a sequence, priorities, quantities, content, or the like of the described objects. In embodiments of this application, use of prefix words such as ordinal numbers used to distinguish between the described objects does not constitute a limitation on the described objects. For descriptions of the described objects, refer to the context descriptions in the claims or embodiments. The use of such prefix words should not constitute a redundant limitation. In addition, in descriptions of embodiments, unless otherwise specified, "a plurality of" means two or more.

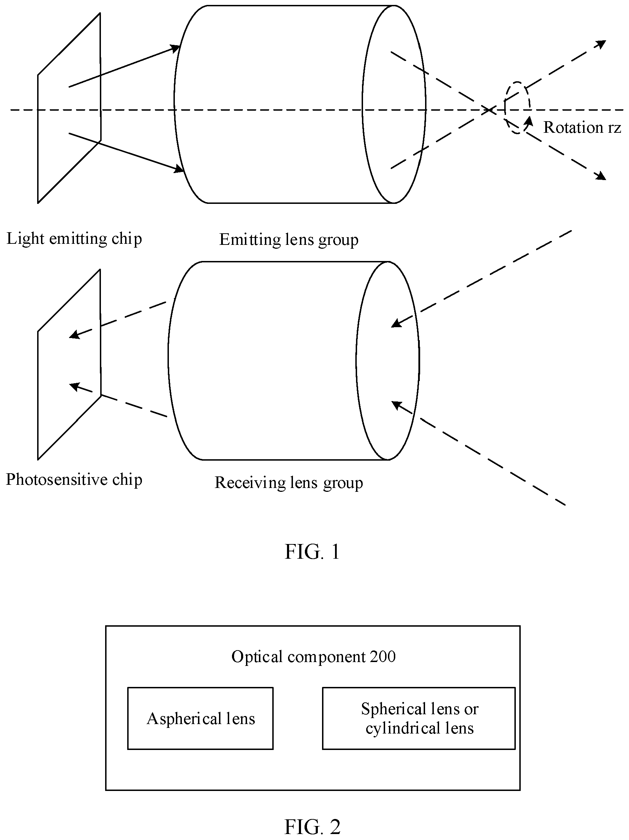

FIG. 1 is a diagram of a lidar 100 according to an embodiment of this application. The lidar 100 may include an emitting module 110 and a receiving module 120. The emitting module 110 includes a laser and an emitting lens group, and the receiving module 120 includes a photosensitive chip and a receiving lens group.

A process of performing emitting/receiving matching between the emitting module 110 and the receiving module 120 includes but is not limited to the following several alignment requirements:

(1) An arrangement of light emitting regions in the laser is aligned with photosensitive regions in the photosensitive chip.

(2) An optical axis of the emitting lens group is aligned with the light emitting region, and an optical axis of the receiving lens group is aligned with the photosensitive chip.

(3) The optical axis of the emitting lens group is aligned with the optical axis of the receiving lens group.

In this embodiment of this application, the modularized optical component facilitates overall adjustment of the emitting lens group. In some embodiments, the emitting lens group may be completely rotationally symmetric around the optical axis. When matching or coupling is performed between the emitting module and the receiving module, only a position of the laser needs to be adjusted, thereby simplifying a matching or coupling process.

FIG. 2 is a block diagram of an optical component 200 according to an embodiment of this application. As shown in FIG. 2, the optical component 200 includes at least one rotationally symmetric aspherical lens, and at least one rotationally symmetric spherical lens or non-rotationally symmetric cylindrical lens. The optical component 200 is configured to shape a laser beam emitted by a laser.

Optionally, a quantity of lenses in the optical component 200 is less than or equal to 3.

For example, the optical component 200 may be located in the foregoing emitting lens group.

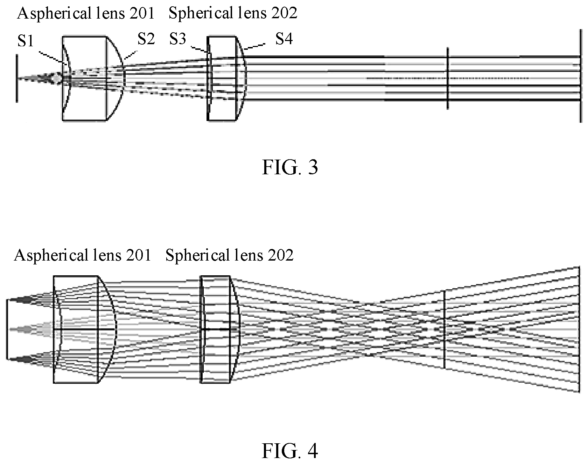

FIG. 3 is a diagram of an optical component 200 according to an embodiment of this application. The optical component 200 includes one rotationally symmetric aspherical lens 201 and one rotationally symmetric spherical lens 202.

For example, material parameters of the aspherical lens 201 and the spherical lens 202 are shown in Table 1.

**Table 1**

| Optical component | Material parameters |
|---|---|
| Aspherical lens 201 | Type: circular aspherical lens (concave and convex) |
| | Material: D-K9 |
| Spherical lens 202 | Type: circular spherical lens (concave and convex) |
| | Material: H-ZLAF50E |

For example, a front surface S1 of the aspherical lens 201 is a concave aspherical surface, a rear surface S2 of the aspherical lens 201 is a convex aspherical surface, a refractive index of the material of the aspherical lens 201 ranges between 1.49 to 1.55, an Abbe number of the aspherical lens 201 ranges between 61 to 67, and the aspherical lens 201 performs primary collimation on a laser beam emitted by a laser.

For example, surface shape parameters of the front surface S1 and the rear surface S2 of the aspherical lens 201 are shown in Table 2.

**Table 2**

| | S1 | S2 |
|---|---|---|
| Radius | (-31.188, -23.391) | (-15.576, -11.682) |
| Conic | (5.373, 7.164) | (-0.744, -0.558) |
| A4 | (-3.6226E-3, -8.0500E-5) | (-7.2708E-4, -1.6157E-5) |
| A6 | (1.6175E-6, 7.2789E-5) | (1.747E-7, 7.9052E-6) |
| A8 | (-4.7171E-7, -1.0482E-8) | (2.4600E-9, 1.1071E-7) |
| A10 | (-1.1634E-9, -2.5850E-11) | (-2.1773E-9, -4.8380E-11) |
| A12 | (1.1717E-12, 5.2725E-11) | (-2.7319E-12, -6.0710E-14) |

Radius represents a curvature radius. Conic represents a conic coefficient. A4, A6, A8, A10, and A12 are aspherical coefficients.

For example, an aperture of the aspherical lens 201 ranges between (9.8 mm, 16.1 mm).

For example, a thickness of the aspherical lens 201 ranges between (5.67 mm, 9.32 mm).

For example, a front surface S3 of the spherical lens 202 is a concave surface, a rear surface S4 of the spherical lens 202 is a convex surface, a refractive index of the material of the spherical lens 202 ranges between 1.75 to 1.85, an Abbe number of the spherical lens 202 ranges between 43 to 49, and the spherical lens 202 performs secondary collimation on the laser beam from the aspherical lens 201.

For example, surface shape parameters of the front surface S3 and the rear surface S4 of the spherical lens 202 are shown in Table 3.

**Table 3**

| | S3 | S4 |
|---|---|---|
| Radius | (-68.88, -51.66) | (-25.92, -19.44) |

For example, an aperture of the spherical lens 202 ranges between (10.5 mm, 17.25 mm).

For example, a thickness of the spherical lens 202 ranges between (3.62 mm, 5.95 mm).

For example, an air gap between the aspherical lens 201 and a center of the laser ranges between (5.6 mm, 9.2 mm), and an air gap between the aspherical lens 201 and a center of the spherical lens 202 ranges between (9.13 mm, 15 mm).

For example, a distance between a beam waist of the laser beam emitted by the laser after being shaped by the optical component and the rear surface S4 of the spherical lens 202 is greater than or equal to 17 mm and less than or equal to 23 mm.

Optionally, the aspherical lens 201 and the spherical lens 202 may form an optical system (or an emitting module) with the laser.

For example, the laser may be a vertical cavity surface emitting laser (vertical cavity surface emitting laser, VCSEL), and the VCSEL includes a plurality of rectangular light emitting regions.

For example, a length of all the light emitting regions ranges between (8.49 mm, 9.83 mm), and a width of a single rectangular light emitting region ranges between (0.08 mm, 0.09 mm).

For example, a total divergence angle of collimated emergent light of laser beams emitted by all the light emitting regions in a long-edge direction of the rectangular light emitting regions ranges between 20° to 25°, and a divergence angle of collimated emergent light of a laser beam emitted by the single rectangular light emitting region in a short-edge direction of the rectangular light emitting region ranges between 0.13° to 0.3°.

For example, the laser includes four rectangular light emitting regions that are staggered, and the four rectangular light emitting regions may be separately driven, or may be simultaneously driven in pairs, to emit light in different time sequences.

For example, FIG. 4 is a diagram in which laser beams emitted by four rectangular light emitting regions are collimated after passing through the aspherical lens 201 and the spherical lens 202 according to an embodiment of this application.

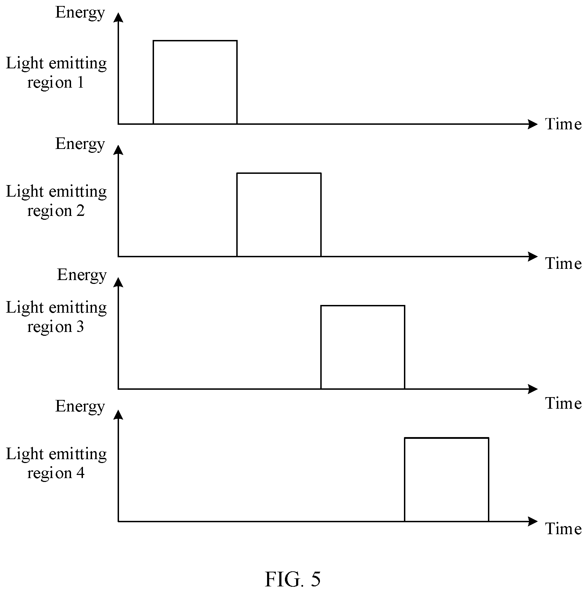

For example, FIG. 5 is a diagram in which light emitting regions emit light in a time-division manner according to an embodiment of this application. A rectangular light emitting region 1, a rectangular light emitting region 2, a rectangular light emitting region 3, and a rectangular light emitting region 4 may emit light in different time sequences.

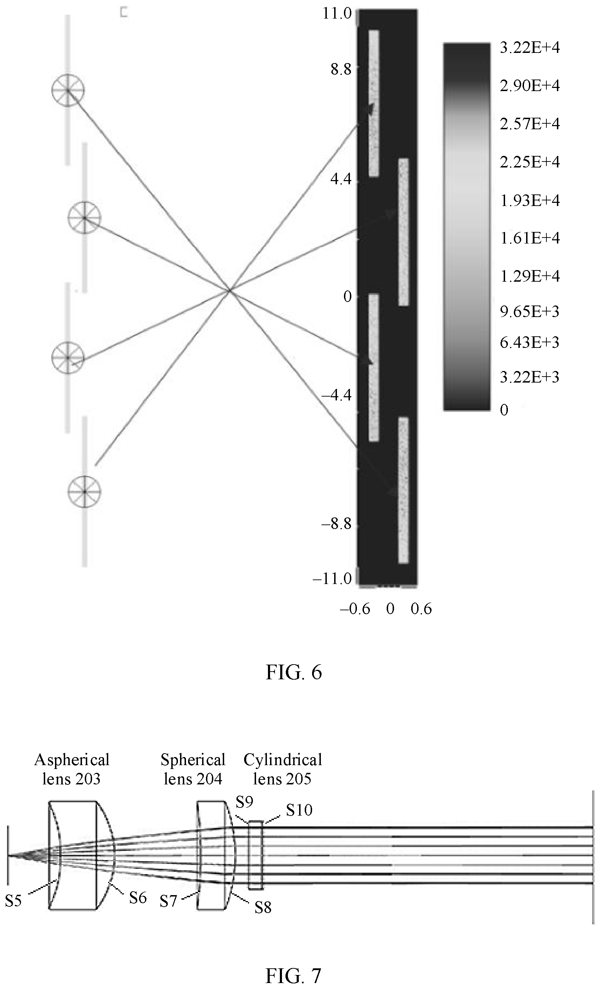

For example, FIG. 6 shows a correspondence between a light emitting region and an emitting light spot according to an embodiment of this application. The rectangular light emitting regions 1 to 4 respectively correspond to photosensitive regions 1 to 4 of the photosensitive chip. Because the optical component includes only two circular lenses with rotationally symmetric surfaces, when matching or coupling is performed between the emitting module and the receiving module, only a position of the laser needs to be adjusted. Therefore, efficiency of matching or coupling between the emitting module and the receiving module is high. In addition, requirements on processing of a lens barrel and assembly of a lens are low.

FIG. 7 is another diagram of an optical component 200 according to an embodiment of this application. The optical component 200 includes an aspherical lens 203, a spherical lens 204, and a cylindrical lens 205.

For example, material parameters of the aspherical lens 203, the spherical lens 204, and the cylindrical lens 205 are shown in Table 4.

**Table 4**

| Optical component | Material parameters |
|---|---|
| Aspherical lens 203 | Type: circular aspherical lens (concave and convex) |
| | Material: D-K9 |
| Spherical lens 204 | Type: circular spherical lens (concave and convex) |
| | Material: H-ZLAF50E |
| Cylindrical lens 205 | Type: rectangular cylindrical lens (plane and concave) |
| | Material: H-QK3L |

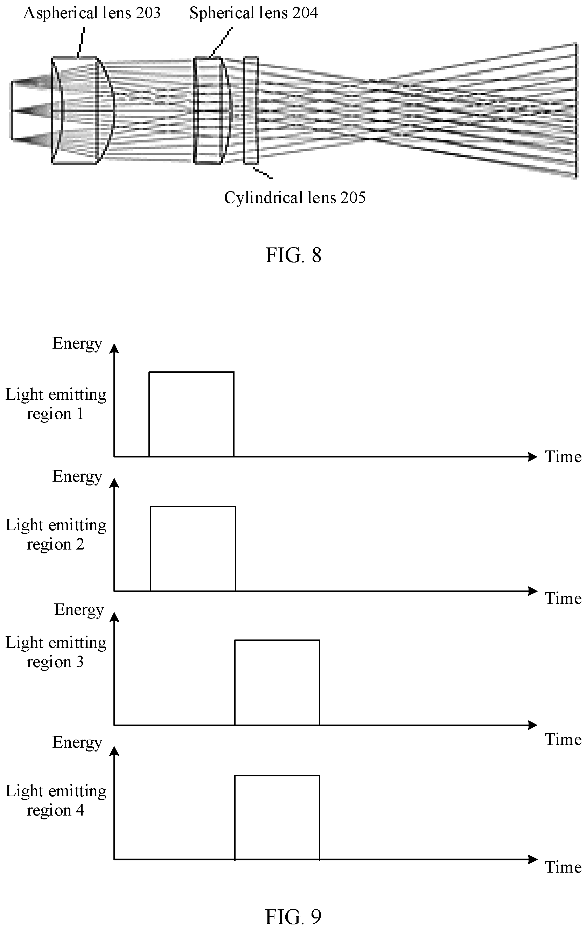

For example, FIG. 8 is a diagram in which laser beams emitted by the laser are collimated after passing through the aspherical lens 203, the spherical lens 204, and the cylindrical lens 205 according to an embodiment of this application.

For example, a front surface S5 of the aspherical lens 203 is a concave aspherical surface, a rear surface S6 of the aspherical lens 203 is a convex aspherical surface, a refractive index of the material of the aspherical lens 203 ranges between 1.45 to 1.6, an Abbe number of the aspherical lens 203 ranges between 61 to 67, and the aspherical lens 203 performs primary collimation on light emitted by the laser.

For example, Table 5 shows surface shape parameters of the aspherical lens 203.

**Table 5**

| | S5 | S6 |
|---|---|---|
| Radius | (-31.19, -23.39) | (-15.58, -11.68) |
| Conic | (5.37, 7.16) | (-0.74, -0.56) |
| A4 | (-3.6226E-3, -8.0500E-5) | (-7.2708E-4, -1.6157E-5) |
| A6 | (1.6175E-6, 7.2789E-5) | (1.747E-7, 7.9052E-6) |
| A8 | (-4.7171E-7, -1.0482E-8) | (2.4600E-9, 1.1071E-7) |
| A10 | (-1.1634E-9, -2.5850E-11) | (-2.1773E-9, -4.8380E-11) |
| A12 | (1.1717E-12, 5.2725E-11) | (-2.7319E-12, -6.0710E-14) |

For example, a thickness of the aspherical lens 203 ranges between (5.67 mm, 9.32 mm).

For example, an aperture of the aspherical lens 203 ranges between (10.5 mm, 17.25 mm).

For example, a front surface S7 of the spherical lens 204 is a concave surface, a rear surface S8 of the spherical lens 204 is a convex surface, a refractive index of the material of the spherical lens 204 ranges between 1.7 to 1.9, and an Abbe number of the spherical lens 204 ranges between 36 to 45. The spherical lens 204 may perform secondary collimation on the laser beam from the aspherical lens 203. After the beam passes through the spherical lens 204, a beam collimation degree is close to 0.

For example, Table 6 shows surface shape parameters of the spherical lens 204.

**Table 6**

| | S7 | S8 |
|---|---|---|
| Radius | (-68.88, -51.66) | (-25.92, -19.44) |

For example, a thickness of the spherical lens 204 ranges between (3.62 mm, 6 mm).

For example, an aperture of the spherical lens 204 ranges between (11.2 mm, 18.4 mm).

For example, a front surface S9 of the cylindrical lens 205 is a plane, and a rear surface S10 of the cylindrical lens 205 is a concave surface. A quasi-line direction (a curvature direction) of the cylindrical lens 205 is in a long-edge direction or a short-edge direction of a rectangular light emitting region in the laser.

For example, a refractive index of the material corresponding to the cylindrical lens 205 ranges between 1.45 to 1.6, and an Abbe number of the cylindrical lens 205 ranges between 61 to 67. A curvature (or focal power) in the quasi-line direction of the cylindrical lens is adjusted, so that the laser beam can be de-focused in the quasi-line direction of the cylindrical lens 205, to generate specific homogenization effect, and broaden a light spot in the long-edge direction. The laser may include a rectangular light emitting region, and the long-edge direction is a long-edge direction of the rectangular light emitting region.

For example, Table 7 shows surface shape parameters of the cylindrical lens 205.

**Table 7**

| | S9 | S10 |
|---|---|---|
| Radius Y | inf | (180.00, 240.00) |

Radius Y is a curvature radius in a Y-axis direction. That Radius Y is inf indicates that S9 is a plane.

For example, a thickness of the cylindrical lens 205 ranges between (1.4 mm, 2.3 mm).

For example, a length of the cylindrical lens 205 ranges between (10.5 mm, 17.25 mm).

For example, a width of the cylindrical lens 205 ranges between (5.6 mm, 9.2 mm).

For example, an air gap between the aspherical lens 203 and a center of the laser ranges between (5.6 mm, 9.2 mm), an air gap between the aspherical lens 203 and a center of the spherical lens 204 ranges between (9.13 mm, 15 mm), and an air gap between the cylindrical lens 205 and the center of the spherical lens 204 ranges between (1.4 mm, 2.3 mm).

For example, a quasi-line direction of the cylindrical lens 205 is in a long-edge direction or a short-edge direction of a rectangular light emitting region in the laser.

The quasi-line direction of the cylindrical lens 205 is a radian direction or a curve direction, and an axis is a curve sweeping direction. The axis direction of the cylindrical lens 205 may be a straight line.

Optionally, a distance between a beam waist of the laser beam emitted by the laser after being shaped by the optical component 200 and the rear surface S10 of the cylindrical lens 205 is greater than or equal to 15 mm and less than or equal to 25 mm.

Optionally, the aspherical lens 203, the spherical lens 204, and the cylindrical lens 205 may form an optical system (or an emitting module) with the laser.

For example, the laser may be a VCSEL, and the VCSEL includes a plurality of rectangular light emitting regions.

For example, a length of all the light emitting regions ranges between (11.4 mm, 13.8 mm), and a width of a single rectangular light emitting region ranges between (0.08 mm, 0.1 mm).

Optionally, the laser is formed by linearly arranging four rectangular light emitting regions. For example, the four rectangular light emitting regions may be separately driven, or may be simultaneously driven in pairs, to emit light in different time sequences.

Optionally, a total divergence angle of collimated emergent light of laser beams emitted by all the light emitting regions in a long-edge direction of the rectangular light emitting regions ranges between 21° to 27°, and a divergence angle of collimated emergent light of a laser beam emitted by the single rectangular light emitting region in a short-edge direction of the rectangular light emitting region ranges between 0.13° to 0.4°.

For example, FIG. 9 is another diagram in which light emitting regions emit light in a time-division manner according to an embodiment of this application. A rectangular light emitting region 1 and a rectangular light emitting region 2 emit light in a same time sequence, and a rectangular light emitting region 3 and a rectangular light emitting region 4 emit light in a same time sequence.

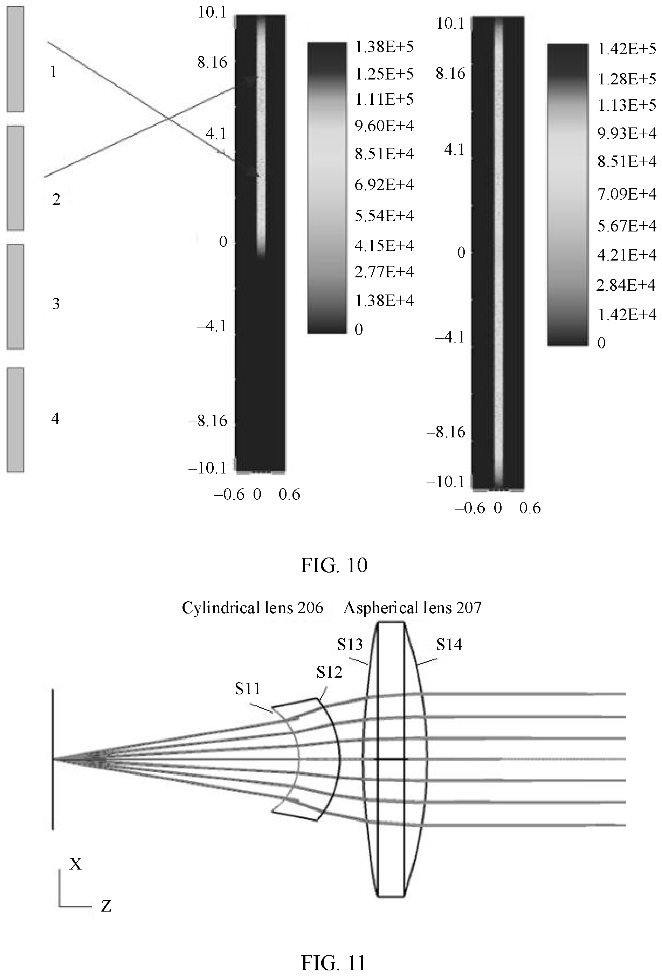

For example, FIG. 10 shows another correspondence between a light emitting region and an emitting light spot according to an embodiment of this application. The rectangular light emitting regions are divided into four partitions, and the four partitions are separated in pairs in a time sequence; and correspondingly, the receiving chip is divided into two partitions. The light emitting component includes two circular lenses with rotationally symmetric surface shapes and one non-rotationally symmetric cylindrical lens. When the emitting module and the receiving module are matched, a quasi-line direction of the cylindrical lens may be in a long-edge direction of a rectangular light emitting region, and a problem of insufficient light spot coverage caused by a gap between light emitting regions in the long-edge direction can be compensated by adjusting the curvature of the cylindrical lens. After being homogenized by the cylindrical lens, two segments of discrete light spots overlap in a vertical direction. The emitting lens group includes only one non-rotationally symmetric cylindrical lens. This helps reduce manufacturing costs and a mounting requirement of the lens, and simplifies a process in which the emitting module and the receiving module perform emitting/receiving matching or coupling.

FIG. 11 is another diagram of an optical component 200 according to an embodiment of this application. The optical component 200 includes a cylindrical lens 206 and an aspherical lens 207.

For example, material parameters of the cylindrical lens 206 and the aspherical lens 207 are shown in Table 8.

**Table 8**

| Optical component | Material parameters |
|---|---|
| Cylindrical lens 206 | Type: rectangular cylindrical lens (concave and convex) |
| | Material: H-QK3L |
| Aspherical lens 207 | Type: circular aspherical lens (convex and convex) |
| | Material: D-ZLAF52LA |

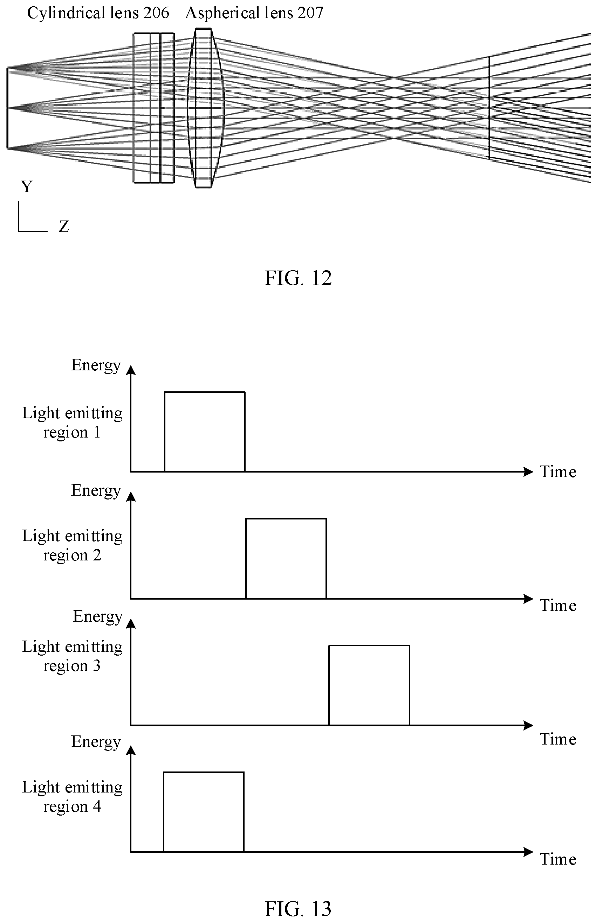

For example, FIG. 12 is a diagram in which laser beams emitted by the laser are collimated after passing through the cylindrical lens 206 and the aspherical lens 207 according to an embodiment of this application.

For example, a front surface S11 of the cylindrical lens 206 is a concave cylindrical surface, a rear surface S12 of the cylindrical lens 206 is a convex cylindrical surface, a refractive index range of the material of the cylindrical lens 206 ranges between 1.45 to 1.51, an Abbe number of the cylindrical lens 206 ranges between 67 to 73, and the cylindrical lens 206 performs primary collimation on the laser beam emitted by the laser.

For example, Table 9 shows surface shape parameters of the cylindrical lens 206.

**Table 9**

| | S11 | S12 |
|---|---|---|
| Radius X | (-4.87, -3.65) | (-7.2, -5.4) |

Radius X represents a curvature radius in an X-axis direction.

For example, a thickness of the cylindrical lens 206 ranges between (1.87 mm, 3.07 mm).

For example, a length of the cylindrical lens 206 ranges between (11.2 mm, 18.4 mm).

For example, a width of the cylindrical lens 206 ranges between (5.6 mm, 9.2 mm).

For example, both a front surface S13 and a rear surface S14 of the aspherical lens 207 are convex surfaces, a refractive index of the material of the aspherical lens 207 ranges between 1.76 to 1.86, an Abbe number of the aspherical lens 207 ranges between 38 to 44, and the aspherical lens 207 performs secondary collimation on the laser beam from the cylindrical lens 206.

For example, Table 10 shows surface shape parameters of the aspherical lens 207.

**Table 10**

| | S13 | S14 |
|---|---|---|
| Radius | (31.54, 42.05) | (-35.09, -26.32) |
| Conic | (2.65, 3.53) | (2.95, 3.94) |
| A4 | (-5.9193E-4, -1.3154E-5) | (-1.1061E-4, -2.4580E-6) |
| A6 | (-6.8803E-7, -1.5290E-8) | (1.0544E-8, 4.7446E-7) |
| A8 | (-1.4664E-8, -3.2590E-10) | (-3.5501E-8, -7.8900E-10) |
| A10 | (1.4595E-11, 6.5679E-10) | (1.7320E-11, 7.7942E-10) |

For example, a thickness of the aspherical lens 207 ranges between (2.92 mm, 4.79 mm).

For example, an aperture of the aspherical lens 207 ranges between (12.6 mm, 20.7 mm).

For example, an air gap between the cylindrical lens 206 and a center of the laser ranges between (11.3 mm, 18.57 mm), and an air gap between the cylindrical lens 206 and a center of the aspherical lens 207 ranges between (1.06 mm, 1.74 mm).

For example, a distance between a beam waist of the laser beam emitted by the laser after being shaped by the optical component and the rear surface S14 of the aspherical lens 207 is greater than or equal to 15 mm and less than or equal to 22 mm.

Optionally, the cylindrical lens 206 and the aspherical lens 207 may form an optical system (or an emitting module) with the laser.

For example, the laser may be a VCSEL, and the VCSEL includes a plurality of rectangular light emitting regions.

For example, a length of all the light emitting regions ranges between (8.52 mm, 10.32 mm), and a width of a single rectangular light emitting region ranges between (0.07 mm, 0.09 mm).

For example, the laser includes four rectangular light emitting regions that are staggered.

For example, the four rectangular light emitting regions may be separately driven, or may be simultaneously driven in pairs, to emit light in different time sequences.

Optionally, a total divergence angle of collimated emergent light of laser beams emitted by all the light emitting regions in a long-edge direction of the light emitting regions ranges between 22° to 28°, and a divergence angle of collimated emergent light of a laser beam emitted by a single rectangular light emitting region in a short-edge direction of the light emitting region ranges between 0.1° to 0.3°.

For example, FIG. 13 is still another diagram in which light emitting regions emit light in a time-division manner according to an embodiment of this application. A rectangular light emitting region 1 and a rectangular light emitting region 4 emit light in a same time sequence, and the rectangular light emitting region 1, a rectangular light emitting region 2, and a rectangular light emitting region 3 emit light in different time sequences.

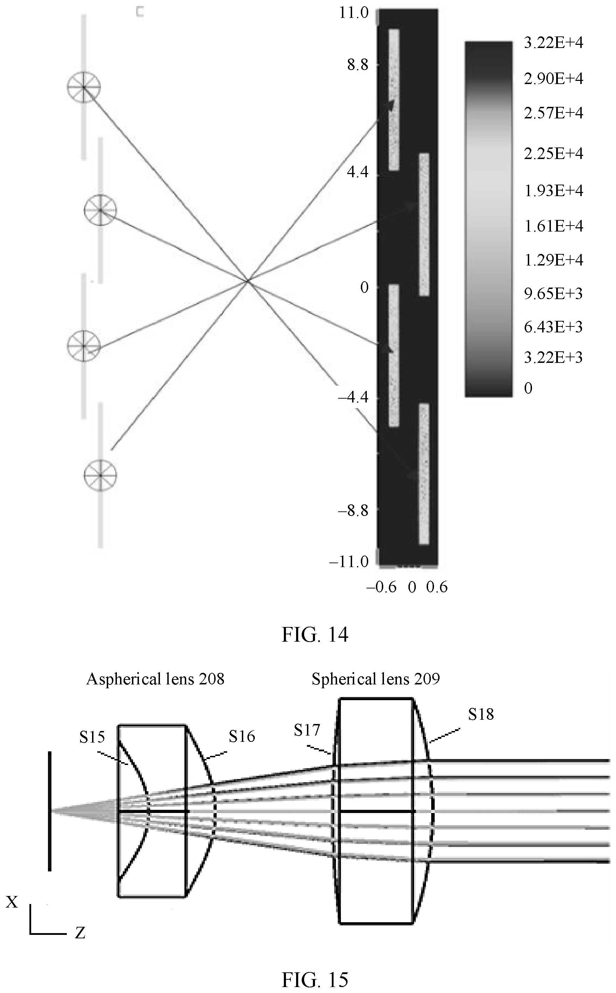

For example, FIG. 14 shows still another correspondence between a light emitting region and an emitting light spot according to an embodiment of this application. The rectangular light emitting regions are divided into four partitions, and correspondingly, the receiving chip is also divided into four partitions. The light emitting component includes one cylindrical lens and one circular lens with a rotationally symmetric surface. When the emitting module and the receiving module are matched, a quasi-line direction (a radian direction) of the cylindrical lens may be in a direction of a long-edge or short-edge direction of a light emitting region. The emitting lens group includes only one non-rotationally symmetric cylindrical lens. This helps reduce manufacturing costs and a mounting requirement of the lens, and simplifies a process in which the emitting module and the receiving module perform emitting/receiving matching or coupling.

FIG. 15 is another diagram of an optical component 200 according to an embodiment of this application. The optical component 200 includes an aspherical lens 208 and a spherical lens 209.

For example, material parameters of the aspherical lens 208 and the spherical lens 209 are shown in Table 11.

**Table 11**

| Optical component | Material parameters |
|---|---|
| Aspherical lens 208 | Type: aspherical lens (concave and convex) |
| | Material: DK59 |
| Spherical lens 209 | Type: spherical lens (convex and convex) |
| | Material: H-ZLAF75A |

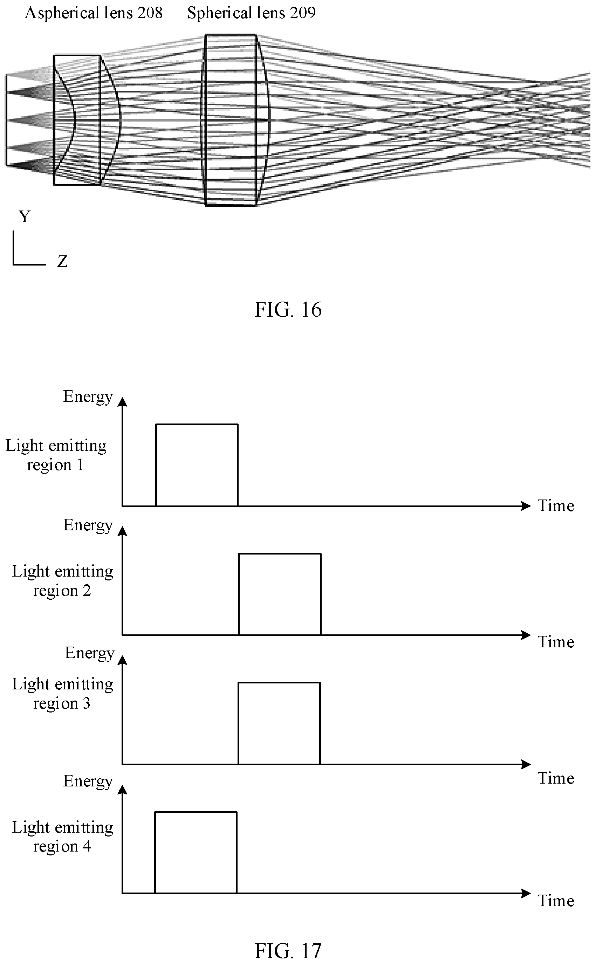

For example, FIG. 16 is a diagram in which laser beams emitted by the laser are collimated after passing through the aspherical lens 208 and the spherical lens 209 according to an embodiment of this application.

For example, a front surface S15 of the aspherical lens 208 is a concave surface, a rear surface S16 of the aspherical lens 208 is a convex surface, a refractive index of the material of the aspherical lens 208 ranges between 1.4 to 1.6, an Abbe number of the aspherical lens 208 ranges between 60 to 66, and the aspherical lens 208 performs primary collimation on the laser beam emitted by the laser.

For example, Table 12 shows surface shape parameters of the aspherical lens 208.

**Table 12**

| | S15 | S16 |
|---|---|---|
| Radius | (-6.320, -4.740) | (-10.049, -7.537) |
| Conic | (-1.2007E+1, -9.0050E0) | (-3.8915E0, -2.9186E0) |
| A4 | (-3.1081E-2, -6.9070E-4) | (4.2610E-5, 1.9176E-3) |
| A6 | (2.919E-5, 1.3138E-3) | (-3.8417E-4, -8.5370E-6) |
| A8 | (-1.0488E-5, -2.3310E-7) | (4.3030E-7, 1.9367E-5) |
| A10 | (-7.6122E-7, -1.6916E-8) | (-4.1409E-7, -9.2020E-9) |
| A12 | (3.7740E-10, 1.6981E-8) | (7.4590E-11, 3.3567E-9) |

For example, a thickness of the aspherical lens 208 ranges between (3.25 mm, 5.34 mm).

For example, an aperture of the aspherical lens 208 ranges between (9.24 mm, 15.64 mm).

For example, a front surface S17 and a rear surface S18 of the spherical lens 209 are convex surfaces, a refractive index of the material of the spherical lens 209 ranges between 1.8 to 2.0, an Abbe number of the spherical lens 209 ranges between 26 to 36, and the spherical lens 209 performs secondary collimation on the laser beam from the aspherical lens 208.

For example, Table 13 shows surface shape parameters of the spherical lens 209.

**Table 13**

| | S17 | S18 |
|---|---|---|
| Radius | (67.607, 90.143) | (-33.652, -25.239) |

For example, a thickness of the spherical lens 209 ranges between (4.9 mm, 8.1 mm).

For example, an aperture of the spherical lens 209 ranges between (12.2 mm, 20 mm).

For example, an air gap between the aspherical lens 208 and a center of the laser ranges between (4.892 mm, 8.036 mm), and an air gap between the spherical lens 209 and a center of the aspherical lens 208 ranges between (5.748 mm, 9.444 mm).

For example, a distance between a beam waist of the laser beam emitted by the laser after being shaped by the optical component and the rear surface S18 of the spherical lens 209 is greater than or equal to 25.5 mm and less than or equal to 31.5 mm.

Optionally, the aspherical lens 208 and the spherical lens 209 may form an optical system (or an emitting module) with the laser.

For example, the laser may be a VCSEL, and the VCSEL includes a plurality of rectangular light emitting regions.

For example, a length of all the light emitting regions ranges between (8.83 mm, 10.22 mm), and a width of a single rectangular light emitting region ranges between (0.09 mm, 0.11 mm).

For example, the laser is formed by linearly arranging four rectangular light emitting regions in pairs.

For example, the four rectangular light emitting regions may be separately driven, or may be simultaneously driven in pairs, to emit light in different time sequences.

For example, a total divergence angle of collimated emergent light of laser beams emitted by all the light emitting regions in a long-edge direction of the light emitting regions ranges between 22° to 28°, and a divergence angle of collimated emergent light of a laser beam emitted by a single rectangular light emitting region in a short-edge direction of the light emitting region ranges between 0.22° to 0.4°.

For example, FIG. 17 is yet another diagram in which light emitting regions emit light in a time-division manner according to an embodiment of this application. A rectangular light emitting region 1 and a rectangular light emitting region 4 emit light in a same time sequence, and a rectangular light emitting region 2 and a rectangular light emitting region 3 emit light in a same time sequence.

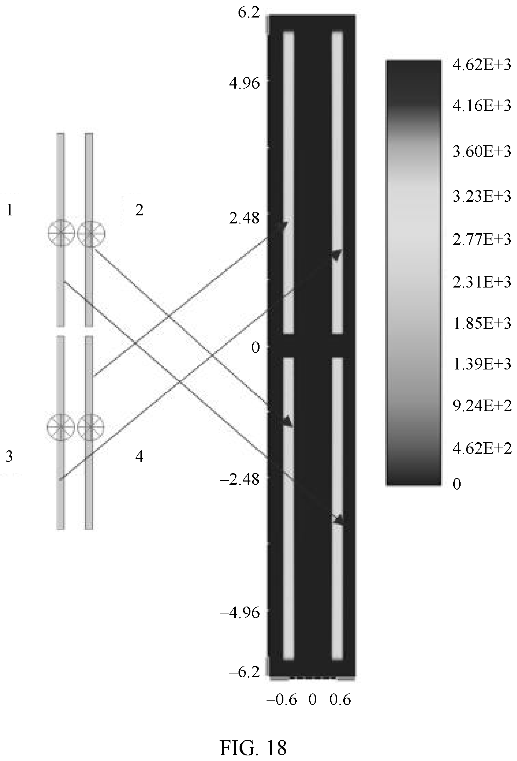

For example, FIG. 18 shows yet another correspondence between a light emitting region and an emitting light spot according to an embodiment of this application. The rectangular light emitting regions are divided into four partitions, and correspondingly, the receiving chip is also divided into four partitions. Because the optical component includes only two circular lenses with rotationally symmetric surfaces, when the emitting module and the receiving module are matched, only a position of the laser needs to be adjusted. In addition, requirements on processing of a lens barrel and assembly of a lens are low.

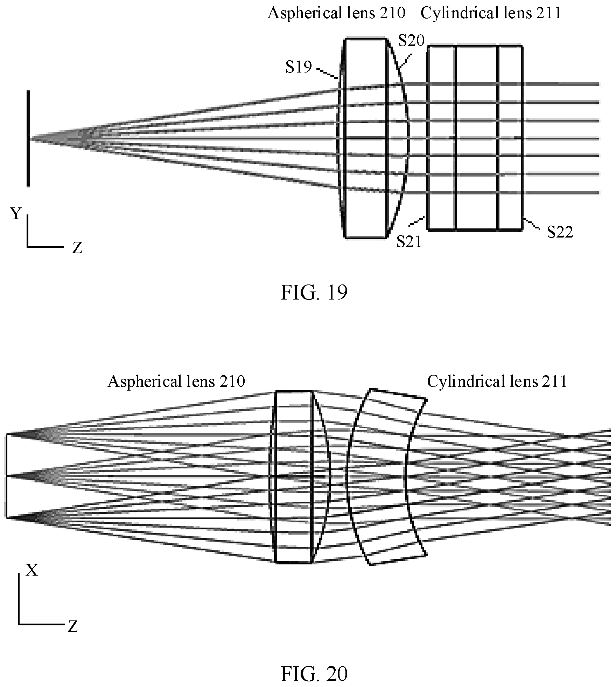

FIG. 19 is another diagram of an optical component 200 according to an embodiment of this application. The optical component 200 includes an aspherical lens 210 and a cylindrical lens 211.

For example, material parameters of the aspherical lens 210 and the cylindrical lens 211 are shown in Table 14.

**Table 14**

| Optical component | Material parameters |
|---|---|
| Aspherical lens 210 | Type: circular aspherical lens (convex and convex) |
| | Material: D-K9 |
| Cylindrical lens 211 | Type: rectangular cylindrical lens (convex and concave) |
| | Material: H-K9L |

For example, FIG. 20 is a diagram in which laser beams emitted by the laser are collimated after passing through the aspherical lens 210 and the cylindrical lens 211 according to an embodiment of this application.

For example, both a front surface S19 and a rear surface S20 of the aspherical lens 210 are convex surfaces, a refractive index of the material of the aspherical lens 210 ranges between 1.49 to 1.55, an Abbe number of the aspherical lens 210 ranges between 61 to 67, and the aspherical lens 210 performs primary collimation on light emitted by the laser.

For example, Table 15 shows surface shape parameters of the aspherical lens 210.

**Table 15**

| | S19 | S20 |
|---|---|---|
| Radius | (30.989, 41.318) | (-22.033, -16.525) |
| Conic | (-77.258, -57.944) | (0.265, 0.353) |
| A4 | (-1.0674E-3, -2.3720E-5) | (-2.2392E-3, -4.8580E-5) |
| A6 | (1.2471E-6, 5.6119E-5) | (2.0680E-6, 9.3060E-5) |
| A8 | (-1.4013E-6, -3.1140E-8) | (-2.1019E-6, -4.6710E-8) |
| A10 | (3.3250E-10, 1.49607E-8) | (4.4190E-10, 1.9886E-8) |

For example, a thickness of the aspherical lens 210 ranges between (3.5 mm, 5.75 mm).

For example, an aperture of the aspherical lens 210 ranges between (10.2 mm, 16.7 mm).

For example, a front surface S21 of the cylindrical lens 211 is a convex cylindrical surface, a rear surface S22 of the cylindrical lens 211 is a concave cylindrical surface, a refractive index of the material of the cylindrical lens 211 ranges between 1.49 to 1.55, and an Abbe number of the cylindrical lens 211 ranges between 61 to 67.

The cylindrical lens 211 may perform secondary collimation on the beam from the aspherical lens 210, and de-focus and homogenization are implemented in a long-edge direction of a light emitting region by adjusting a curvature.

For example, Table 16 shows surface shape parameters of the cylindrical lens 211.

**Table 16**

| | S21 | S22 |
|---|---|---|
| Radius Y | (12.832, 17.110) | (11.339, 15.119) |

For example, a thickness of the cylindrical lens 211 ranges between (3.42 mm, 5.61 mm).

For example, a length of the cylindrical lens 211 ranges between (10.5 mm, 17.3 mm).

For example, a width of the cylindrical lens 211 ranges between (9.1 mm, 15 mm).

For example, an air gap between the aspherical lens 210 and a center of the laser ranges between (15.279 mm, 25.098 mm), and an air gap between the cylindrical lens 211 and a center of the aspherical lens 210 ranges between (0.963 mm, 1.582 mm).

Optionally, a distance between a beam waist of the laser beam emitted by the laser after being shaped by the optical component and the rear surface S22 of the cylindrical lens 211 is greater than or equal to 10 mm and less than or equal to 20 mm.

Optionally, the aspherical lens 210 and the cylindrical lens 211 may form an optical system (or an emitting module) with the laser.

For example, the laser may be a VCSEL, and the VCSEL includes a plurality of rectangular light emitting regions.

For example, a length of all the light emitting regions ranges between (6.5 mm, 7.5 mm), and a width of a single rectangular light emitting region ranges between (0.7 mm, 0.9 mm).

For example, the laser includes three light emitting regions that are staggered, and the three rectangular light emitting regions may be separately driven, or may be simultaneously driven in pairs, to emit light in different time sequences.

Optionally, a total divergence angle of collimated emergent light of laser beams emitted by all the light emitting regions in a long-edge direction of the light emitting regions ranges between 15° to 21°, and a divergence angle of collimated emergent light of a laser beam emitted by a single rectangular light emitting region in a short-edge direction of the light emitting region ranges between 0.15° to 0.35°.

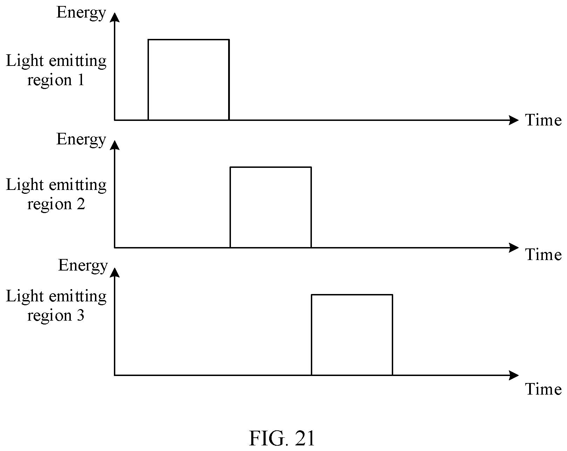

For example, FIG. 21 is a diagram in which light emitting regions emit light in a time-division manner according to an embodiment of this application. A rectangular light emitting region 1, a rectangular light emitting region 2, and a rectangular light emitting region 3 emit light in different time sequences.

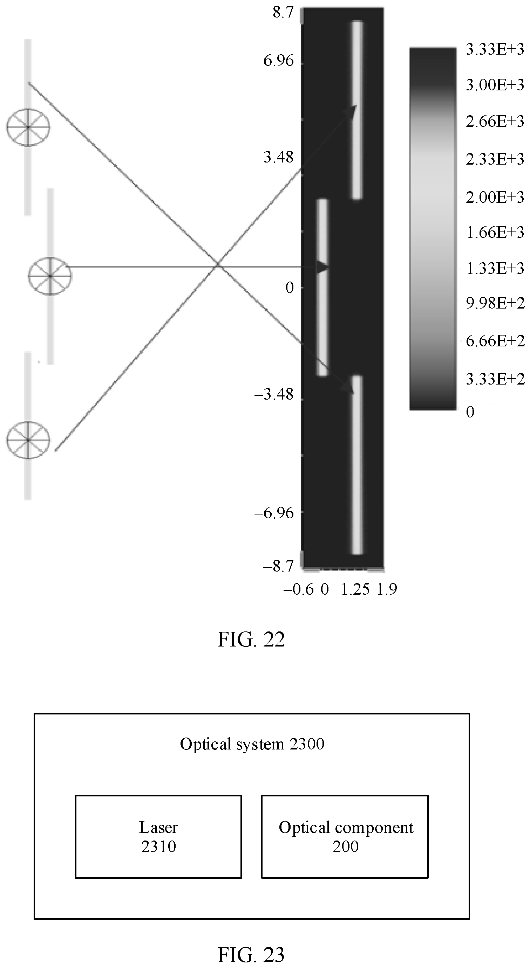

For example, FIG. 22 shows a correspondence between a light emitting region and an emitting light spot according to an embodiment of this application. The light emitting regions are divided into three partitions, and correspondingly, the receiving chip is also divided into three partitions. The optical component includes one circular lens with a rotationally symmetric surface and one non-rotationally symmetric cylindrical lens. When the emitting module and the receiving module are matched, a quasi-line direction of the cylindrical lens may be in a long-edge or short-edge direction of a light emitting region. After a light spot is homogenized by the cylindrical lens, energy in each segment of the light spot is evenly distributed. The optical component includes only one non-rotationally symmetric cylindrical lens. This helps reduce manufacturing costs and a mounting requirement of the lens, and simplifies a process in which the emitting module and the receiving module perform emitting/receiving matching or coupling.

In the foregoing embodiments, a sequence in which the rectangular light emitting regions in the laser emit light is merely an example. This is not specifically limited in embodiments of this application.

For example, in a light emitting system including the optical component 200 shown in FIG. 3 and a laser, a light emitting region 1 and a light emitting region 2 may emit light in a same time sequence, and a light emitting region 3 and a light emitting region 4 may emit light in a same time sequence.

For another example, in a light emitting system including the optical component 200 shown in FIG. 3 and a laser, a light emitting region 1 and a light emitting region 4 may emit light in a same time sequence, and the light emitting region 1, a light emitting region 2, and a light emitting region 3 may emit light in different time sequences.

FIG. 23 is a block diagram of an optical system 2300 according to an embodiment of this application. The optical system 2300 includes a laser 2310 and an optical component 200.

Optionally, the laser 2310 includes a plurality of rectangular light emitting regions, and a length-width ratio of each of the plurality of rectangular light emitting regions is greater than or equal to 5.

Optionally, the plurality of rectangular light emitting regions emit light in a time-division manner.

For example, as shown in FIG. 5, a rectangular light emitting region 1, a rectangular light emitting region 2, a rectangular light emitting region 3, and a rectangular light emitting region 4 may emit light in the time-division manner.

Optionally, the plurality of rectangular light emitting regions include a first rectangular light emitting region and a second rectangular light emitting region, the first rectangular light emitting region and the second rectangular light emitting region are staggered in a long-edge direction, and a length of staggering is greater than or equal to 100 µm.

For example, as shown in FIG. 6, a rectangular light emitting region 1, a rectangular light emitting region 2, a rectangular light emitting region 3, and a rectangular light emitting region 4 are staggered in the long-edge direction, and the length of staggering is greater than or equal to 100 µm. In this way, a gap caused by a mounting error can be avoided.

Optionally, the plurality of rectangular light emitting regions include a third rectangular light emitting region and a fourth rectangular light emitting region that are adjacent to each other, the third rectangular light emitting region and the fourth rectangular light emitting region are linearly arranged in the long-edge direction, and a gap between the third rectangular light emitting region and the fourth rectangular light emitting region is greater than or equal to 100 µm.

For example, as shown in FIG. 10, a rectangular light emitting region 1, a rectangular light emitting region 2, a rectangular light emitting region 3, and a rectangular light emitting region 4 are linearly arranged in the long-edge direction, and a gap between adjacent rectangular light emitting regions is greater than or equal to 100 µm. In this way, two adjacent rectangular light emitting regions can be isolated on an electrical device.

An embodiment of this application further provides a lidar. The lidar may include the optical component 200 or the optical system 2300.

An embodiment of this application further provides a terminal device. The terminal device may include the foregoing lidar.

Optionally, the terminal device may be a vehicle.

The vehicle in this embodiment of this application is a vehicle in a broad sense, and may be a transportation tool (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in this embodiment of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical component, wherein the optical component comprises at least one rotationally symmetric aspherical lens, and at least one rotationally symmetric spherical lens or at least one non-rotationally symmetric cylindrical lens, and the optical component is configured to shape a laser beam emitted by a laser; and
a quantity of lenses in the optical component is less than or equal to 3.

2. The optical component according to claim 1, wherein the optical component comprises one rotationally symmetric aspherical lens and one rotationally symmetric spherical lens;
the aspherical lens is configured to perform primary collimation on the laser beam emitted by the laser, to obtain a first beam; and
the spherical lens is configured to perform secondary collimation on the first beam, to obtain a second beam.

3. The optical component according to claim 2, wherein a front surface of the aspherical lens is a concave surface, a rear surface of the aspherical lens is a convex surface, a refractive index of the aspherical lens ranges between 1.49 to 1.55, and an Abbe number of the aspherical lens ranges between 61 to 67;
a front surface of the spherical lens is a concave surface, a rear surface of the spherical lens is a convex surface, a refractive index of the spherical lens ranges between 1.75 to 1.85, and an Abbe number of the spherical lens ranges between 43 to 49; and
the front surface is a surface close to the laser, and the rear surface is a surface away from the laser.

4. The optical component according to claim 2 or 3, wherein
surface shape parameters of the aspherical lens are:
| | S1 | S2 |
|---|---|---|
| Radius | (-31.188, -23.391) | (-15.576, -11.682) |
| Conic | (5.373, 7.164) | (-0.744, -0.558) |
| A4 | (-3.6226E-3, -8.0500E-5) | (-7.2708E-4, -1.6157E-5) |
| A6 | (1.6175E-6, 7.2789E-5) | (1.747E-7, 7.9052E-6) |
| A8 | (-4.7171E-7, -1.0482E-8) | (2.4600E-9, 1.1071E-7) |
| A10 | (-1.1634E-9, -2.5850E-11) | (-2.1773E-9, -4.8380E-11) |
| A12 | (1.1717E-12, 5.2725E-11) | (-2.7319E-12, -6.0710E-14) |
S1 is the front surface of the aspherical lens, S2 is the rear surface of the aspherical lens, and a thickness of the aspherical lens ranges between (5.67 mm, 9.32 mm);
surface shape parameters of the spherical lens are:
| | S3 | S4 |
|---|---|---|
| Radius | (-68.88, -51.66) | (-25.92, -19.44) |
S3 is the front surface of the spherical lens, S4 is the rear surface of the spherical lens, and a thickness of the spherical lens ranges between (3.62 mm, 5.95 mm); and
an air gap between the aspherical lens and a center of the laser ranges between (5.6 mm, 9.2 mm), and an air gap between the aspherical lens and a center of the spherical lens ranges between (9.13 mm, 15 mm).

5. The optical component according to any one of claims 2 to 4, wherein a distance between a beam waist of the laser beam emitted by the laser after being shaped by the optical component and the rear surface of the spherical lens is greater than or equal to 17 mm and less than or equal to 23 mm.

6. The optical component according to any one of claims 2 to 5, wherein a length of a light emitting region in the laser ranges between (8.49 mm, 9.83 mm), and a divergence angle of the laser beam emitted by the laser after being shaped by the optical component in a long-edge direction of the light emitting region ranges between 20° to 25°.

7. The optical component according to claim 1, wherein the optical component comprises one rotationally symmetric aspherical lens, one rotationally symmetric spherical lens, and one non-rotationally symmetric cylindrical lens;
the aspherical lens is configured to perform primary collimation on the laser beam emitted by the laser, to obtain a third beam;
the spherical lens is configured to perform secondary collimation on the third beam, to obtain a fourth beam; and
the cylindrical lens is configured to homogenize the fourth beam, to obtain a fifth beam.

8. The optical component according to claim 7, wherein two discrete light spots formed after the beam is homogenized by the cylindrical lens in a vertical direction.

9. The optical component according to claim 7 or 8, wherein a front surface of the aspherical lens is a concave surface, a rear surface of the aspherical lens is a convex surface, a refractive index of the aspherical lens ranges between 1.45 to 1.6, and an Abbe number of the aspherical lens ranges between 61 to 67;
a front surface of the spherical lens is a concave surface, a rear surface of the spherical lens is a convex surface, a refractive index of the spherical lens ranges between 1.7 to 1.9, and an Abbe number of the spherical lens ranges between 36 to 45;
a front surface of the cylindrical lens is a plane, a rear surface of the cylindrical lens is a concave surface, a refractive index of the cylindrical lens ranges between 1.45 to 1.6, and an Abbe number of the cylindrical lens ranges between 61 to 67; and
the front surface is a surface close to the laser, and the rear surface is a surface away from the laser.

10. The optical component according to any one of claims 7 to 9, wherein
surface shape parameters of the aspherical lens are:
| | S5 | S6 |
|---|---|---|
| Radius | (-31.19, -23.39) | (-15.58, -11.68) |
| Conic | (5.37, 7.16) | (-0.74, -0.56) |
| A4 | (-3.6226E-3, -8.0500E-5) | (-7.2708E-4, -1.6157E-5) |
| A6 | (1.6175E-6, 7.2789E-5) | (1.747E-7, 7.9052E-6) |
| A8 | (-4.7171E-7, -1.0482E-8) | (2.4600E-9, 1.1071E-7) |
| A10 | (-1.1634E-9, -2.5850E-11) | (-2.1773E-9, -4.8380E-11) |
| A12 | (1.1717E-12, 5.2725E-11) | (-2.7319E-12, -6.0710E-14) |
S5 is the front surface of the aspherical lens, S6 is the rear surface of the aspherical lens, and a thickness of the aspherical lens ranges between (5.67 mm, 9.32 mm);
surface shape parameters of the spherical lens are:
| | S7 | S8 |
|---|---|---|
| Radius | (-68.88, -51.66) | (-25.92, -19.44) |
S7 is the front surface of the spherical lens, S8 is the rear surface of the spherical lens, and a thickness of the spherical lens ranges between (3.62 mm, 6 mm);
surface shape parameters of the cylindrical lens are:
| | S9 | S10 |
|---|---|---|
| Radius Y | inf | (180.00, 240.00) |
S9 is the front surface of the cylindrical lens, S10 is the rear surface of the cylindrical lens, and a thickness of the cylindrical lens ranges between (1.4 mm, 2.3 mm); and
an air gap between the aspherical lens and a center of the laser ranges between (5.6 mm, 9.2 mm), an air gap between the aspherical lens and a center of the spherical lens ranges between (9.13 mm, 15 mm), and an air gap between the cylindrical lens and the center of the spherical lens ranges between (1.4 mm, 2.3 mm).

11. The optical component according to any one of claims 7 to 10, wherein a distance between a beam waist of the laser beam emitted by the laser after being shaped by the optical component and the rear surface of the cylindrical lens is greater than or equal to 15 mm and less than or equal to 25 mm.

12. The optical component according to any one of claims 7 to 11, wherein a length of a light emitting region in the laser ranges between (11.4 mm, 13.8 mm), and a divergence angle of the laser beam emitted by the laser after being shaped by the optical component in a long-edge direction of the light emitting region ranges between 21° to 27°.

13. The optical component according to claim 1, wherein the optical component comprises one non-rotationally symmetric cylindrical lens and one rotationally symmetric aspherical lens;
the cylindrical lens is configured to perform primary collimation on the laser beam emitted by the laser, to obtain a sixth beam; and
the aspherical lens is configured to perform secondary collimation on the sixth beam, to obtain a seventh beam.

14. The optical component according to claim 13, wherein a front surface of the cylindrical lens is a concave surface, a rear surface of the cylindrical lens is a convex surface, a refractive index of the cylindrical lens ranges between 1.45 to 1.51, and an Abbe number of the cylindrical lens ranges between 67 to 73;
a front surface and a rear surface of the aspherical lens are convex surfaces, a refractive index of the aspherical lens ranges between 1.76 to 1.86, and an Abbe number of the aspherical lens ranges between 38 to 44; and
the front surface is a surface close to the laser, and the rear surface is a surface away from the laser.

15. The optical component according to claim 13 or 14, wherein
surface shape parameters of the cylindrical lens are:
| | S11 | S12 |
|---|---|---|
| Radius X | (-4.87, -3.65) | (-7.2, -5.4) |
S11 is the front surface of the cylindrical lens, S12 is the rear surface of the cylindrical lens, and a thickness of the cylindrical lens ranges between (1.87 mm, 3.07 mm);
surface shape parameters of the aspherical lens are:
| | S13 | S14 |
|---|---|---|
| Radius | (31.54, 42.05) | (-35.09, -26.32) |
| Conic | (2.65, 3.53) | (2.95, 3.94) |
| A4 | (-5.9193E-4, -1.3154E-5) | (-1.1061E-4, -2.4580E-6) |
| A6 | (-6.8803E-7, -1.5290E-8) | (1.0544E-8, 4.7446E-7) |
| A8 | (-1.4664E-8, -3.2590E-10) | (-3.5501E-8, -7.8900E-10) |
| A10 | (1.4595E-11, 6.5679E-10) | (1.7320E-11, 7.7942E-10) |
S13 is the front surface of the aspherical lens, S14 is the rear surface of the aspherical lens, and a thickness of the aspherical lens ranges between (2.92 mm, 4.79 mm); and
an air gap between the cylindrical lens and a center of the laser ranges between (11.3 mm, 18.57 mm), and an air gap between the cylindrical lens and a center of the aspherical lens ranges between (1.06 mm, 1.74 mm).

16. The optical component according to any one of claims 13 to 15, wherein a distance between a beam waist of the laser beam emitted by the laser after being shaped by the optical component and the rear surface of the aspherical lens is greater than or equal to 15 mm and less than or equal to 22 mm.

17. The optical component according to any one of claims 13 to 16, wherein a length of a light emitting region in the laser ranges between (8.52 mm, 10.32 mm), and a divergence angle of the laser beam emitted by the laser after being shaped by the optical component in a long-edge direction of the light emitting region ranges between 22° to 28°.

18. The optical component according to claim 1, wherein the optical component comprises one rotationally symmetric aspherical lens and one rotationally symmetric spherical lens;
the aspherical lens is configured to perform primary collimation on the laser beam emitted by the laser, to obtain an eighth beam; and
the spherical lens is configured to perform secondary collimation on the eighth beam, to obtain a ninth beam.

19. The optical component according to claim 18, wherein a front surface of the aspherical lens is a concave surface, a rear surface of the aspherical lens is a convex surface, a refractive index of the aspherical lens ranges between 1.4 to 1.6, and an Abbe number of the aspherical lens ranges between 60 to 66;
a front surface and a rear surface of the spherical lens are convex surfaces, a refractive index of the spherical lens ranges between 1.8 to 2.0, and an Abbe number of the spherical lens ranges between 26 to 36; and
the front surface is a surface close to the laser, and the rear surface is a surface away from the laser.

20. The optical component according to claim 18 or 19, wherein
surface shape parameters of the aspherical lens are:
| | S15 | S16 |
|---|---|---|
| Radius | (-6.320, -4.740) | (-10.049, -7.537) |
| Conic | (-1.2007E+1, -9.0050E0) | (-3.8915E0, -2.9186E0) |
| A4 | (-3.1081E-2, -6.9070E-4) | (4.2610E-5, 1.9176E-3) |
| A6 | (2.919E-5, 1.3138E-3) | (-3.8417E-4, -8.5370E-6) |
| A8 | (-1.0488E-5, -2.3310E-7) | (4.3030E-7, 1.9367E-5) |
| | S15 | S16 |
|---|---|---|
| A10 | (-7.6122E-7, -1.6916E-8) | (-4.1409E-7, -9.2020E-9) |
| A12 | (3.7740E-10, 1.6981E-8) | (7.4590E-11, 3.3567E-9) |
S15 is the front surface of the aspherical lens, S16 is the rear surface of the aspherical lens, and a thickness of the aspherical lens ranges between (3.25 mm, 5.34 mm);
surface shape parameters of the spherical lens are:
| | S17 | S18 |
|---|---|---|
| Radius | (67.607, 90.143) | (-33.652, -25.239) |
S17 is the front surface of the spherical lens, S18 is the rear surface of the spherical lens, and a thickness of the spherical lens ranges between (4.9 mm, 8.1 mm); and
an air gap between the aspherical lens and a center of the laser ranges between (4.892 mm, 8.036 mm), and an air gap between the spherical lens and a center of the aspherical lens ranges between (5.748 mm, 9.444 mm).

21. The optical component according to any one of claims 18 to 20, wherein a distance between a beam waist of the laser beam emitted by the laser after being shaped by the optical component and the rear surface of the spherical lens is greater than or equal to 25.5 mm and less than or equal to 31.5 mm.

22. The optical component according to any one of claims 18 to 21, wherein a length of a light emitting region in the laser ranges between (8.83 mm, 10.22 mm), and a divergence angle of the laser beam emitted by the laser after being shaped by the optical component in a long-edge direction ranges between 22° to 28°.

23. The optical component according to claim 1, wherein the optical component comprises one rotationally symmetric aspherical lens and one non-rotationally symmetric cylindrical lens;
the aspherical lens is configured to perform primary collimation on the laser beam emitted by the laser, to obtain a tenth beam; and
the cylindrical lens is configured to perform secondary collimation and homogenization on the tenth beam, to obtain an eleventh beam.

24. The optical component according to claim 23, wherein a light spot formed after the beam is homogenized by the cylindrical lens has a uniform energy distribution in a vertical direction.

25. The optical component according to claim 23 or 24, wherein a front surface and a rear surface of the aspherical lens are convex surfaces, a refractive index of the aspherical lens ranges between 1.49 to 1.55, and an Abbe number of the aspherical lens ranges between 61 to 67;
a front surface of the cylindrical lens is a convex surface, a rear surface of the cylindrical lens is a concave surface, a refractive index of the cylindrical lens ranges between 1.49 to 1.55, and an Abbe number of the cylindrical lens ranges between 61 to 67; and
the front surface is a surface close to the laser, and the rear surface is a surface away from the laser.

26. The optical component according to any one of claims 23 to 25, wherein
surface shape parameters of the aspherical lens are:
| | S19 | S20 |
|---|---|---|
| Radius | (30.989, 41.318) | (-22.033, -16.525) |
| Conic | (-77.258, -57.944) | (0.265, 0.353) |
| A4 | (-1.0674E-3, -2.3720E-5) | (-2.2392E-3, -4.8580E-5) |
| A6 | (1.2471E-6, 5.6119E-5) | (2.0680E-6, 9.3060E-5) |
| A8 | (-1.4013E-6, -3.1140E-8) | (-2.1019E-6, -4.6710E-8) |
| A10 | (3.3250E-10, 1.49607E-8) | (4.4190E-10, 1.9886E-8) |
S19 is the front surface of the aspherical lens, S20 is the rear surface of the aspherical lens, and a thickness of the aspherical lens ranges between (3.5 mm, 5.75 mm);
surface shape parameters of the cylindrical lens are:
| | S21 | S22 |
|---|---|---|
| Radius Y | (12.832, 17.110) | (11.339, 15.119) |
S21 is the front surface of the cylindrical lens, S22 is the rear surface of the cylindrical lens, and a thickness of the cylindrical lens ranges between (3.42 mm, 5.61 mm); and
an air gap between the aspherical lens and a center of the laser ranges between (15.279 mm, 25.098 mm), and an air gap between the cylindrical lens and a center of the aspherical lens ranges between (0.963 mm, 1.582 mm).

27. The optical component according to any one of claims 23 to 26, wherein a distance between a beam waist of the laser beam emitted by the laser after being shaped by the optical component and the rear surface of the cylindrical lens is greater than or equal to 10 mm and less than or equal to 20 mm.

28. The optical component according to any one of claims 23 to 27, wherein a length of a light emitting region in the laser ranges between (6.5 mm, 7.5 mm), and a divergence angle of the laser beam emitted by the laser after being shaped by the optical component in a long-edge direction ranges between 15° to 21°.

29. An optical system, wherein the optical system comprises a laser and the optical component according to any one of claims 1 to 28.

30. The optical system according to claim 29, wherein
the laser comprises a plurality of rectangular light emitting regions, and a length-width ratio of each of the plurality of rectangular light emitting regions is greater than or equal to 5.

31. The optical system according to claim 30, wherein the plurality of rectangular light emitting regions emit light in a time-division manner.

32. The optical system according to claim 30 or 31, wherein the plurality of rectangular light emitting regions comprise a first rectangular light emitting region and a second rectangular light emitting region, the first rectangular light emitting region and the second rectangular light emitting region are staggered in a long-edge direction, and a length of staggering is greater than or equal to 100 µm.

33. The optical system according to any one of claims 30 to 32, wherein the plurality of rectangular light emitting regions comprise a third rectangular light emitting region and a fourth rectangular light emitting region that are adjacent to each other, the third rectangular light emitting region and the fourth rectangular light emitting region are linearly arranged in the long-edge direction, and a gap between the third rectangular light emitting region and the fourth rectangular light emitting region is greater than or equal to 100 µm.

34. A lidar, wherein the lidar comprises the optical component according to any one of claims 1 to 28, or comprises the optical system according to any one of claims 29 to 33.

35. A terminal device, wherein the terminal device comprises the lidar according to claim 34.

36. The terminal device according to claim 35, wherein the terminal device is a vehicle.
